# EUROPEAN PATENT APPLICATION

(11) **EP 4 343 667 A1**
(43) Date of publication of application: **27.03.2024**
(21) Application number: 21940896.0
(22) Date of filing: 07.12.2021
(51) Int. Cl.: G06Q 40/08

(54) **INSURANCE PREMIUM CALCULATION METHOD, PROGRAM AND INSURANCE PREMIUM CALCULATION SYSTEM**

(30) Priority: 19.05.2021 US 202163190435 P
(71) Applicant: Panasonic Intellectual Property Management Co., Ltd., Kadoma-shi, Osaka 571-0057 (JP)
(72) Inventor: TOJIMA, Masayoshi, Kadoma-shi, Osaka 571-0057 (JP); KUHARA, Shunsuke, Kadoma-shi, Osaka 571-0057 (JP)
(74) Representative: Novagraaf International SA
(86) International application number: PCT/JP2021/044937
(87) International publication number: WO 2022/244285

(57) **Abstract**

An insurance-premium calculation method includes processing that includes acquiring first information about a configuration included in an autonomous mobile unit (step S21), calculating, in accordance with the first information, a first insurance premium on losses that may be incurred when the autonomous mobile unit is moving (step S23), acquiring second information about a condition of the autonomous mobile unit in motion during a first period (step S24), calculating a second insurance premium by correcting the first insurance premium in accordance with the second information (step S27), and outputting the second insurance premium as an insurance premium for a second period later than the first period (step S28).

## Description

### [Technical Field]

The present disclosure relates to an insurance-premium calculation method, a program, and an insurance-premium calculation system.

### [Background Art]

Patent Literature (PTL) 1 discloses a method for accruing information about automatic operation of a self-operating vehicle and identifying, on the basis of the acquired information, where the responsibility for an accident related to the self-operating vehicle lies.

### [Citation List]

### [Patent Literature]

[PTL 1]
Japanese Unexamined Patent Application Publication No. 2020-166541

### [Summary of Invention]

### [Technical Problem]

The method disclosed in PTL 1 described above, however, fails to disclose the calculation of an insurance premium on losses that may be incurred when an autonomous mobile unit such as a self-operating vehicle is moving.

In view of this, the present disclosure provides an insurance-premium calculation method and so on that enables accurate calculation of an insurance premium on losses that may be incurred when an autonomous mobile unit is moving.

### [Solution to Problem]

An insurance-premium calculation method according to the present disclosure is an insurance-premium calculation method that is executed by a computer and that includes acquiring first information about a configuration included in an autonomous mobile unit, calculating, in accordance with the first information, a first insurance premium on a loss that is possibly be incurred when the autonomous mobile unit is moving, acquiring second information about a condition of the autonomous mobile unit in motion during a first period, calculating a second insurance premium by correcting the first insurance premium in accordance with the second information, and outputting the second insurance premium as an insurance premium for a second period later than the first period.

Note that these comprehensive or specific aspects may be implemented as systems, methods, integrated circuits, computer programs, or computer-readable recording media such as CD-ROMs, or may be implemented as any combination of systems, methods, integrated circuits, computer programs, and recording media.

### [Advantageous Effects of Invention]

With the insurance-premium calculation method and so on according to one aspect of the present disclosure, it is possible to accurately calculate an insurance premium on losses that may be incurred when an autonomous mobile unit is moving.

### [Brief Description of Drawings]

[FIG. 1]

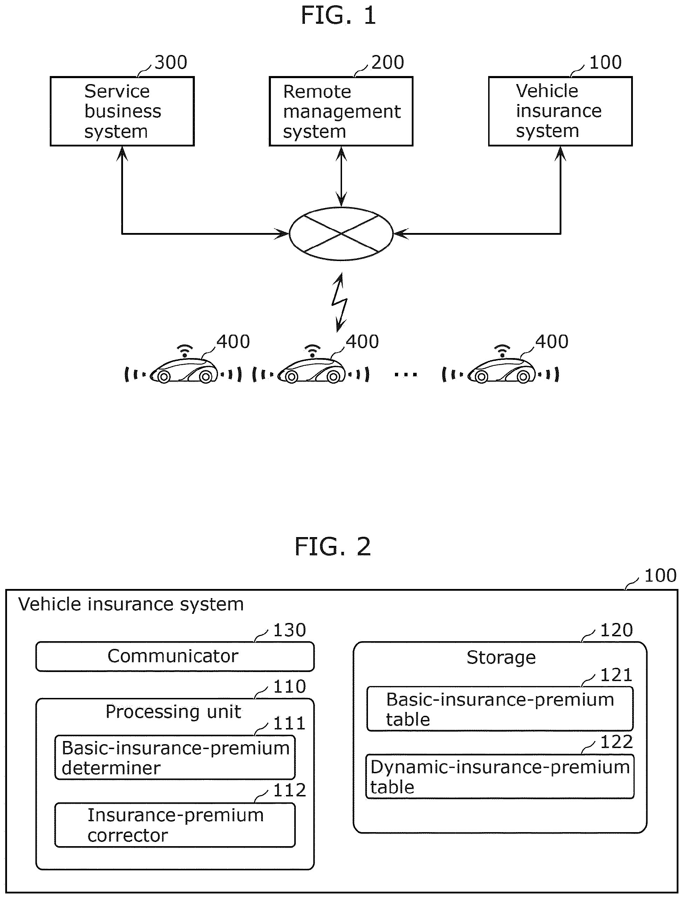

   FIG. 1 is a diagram showing an example of application of a vehicle insurance system according to one embodiment.
[FIG. 2]
   FIG. 2 is a block diagram showing one example of a configuration of the vehicle insurance system according to the embodiment.
[FIG. 3]

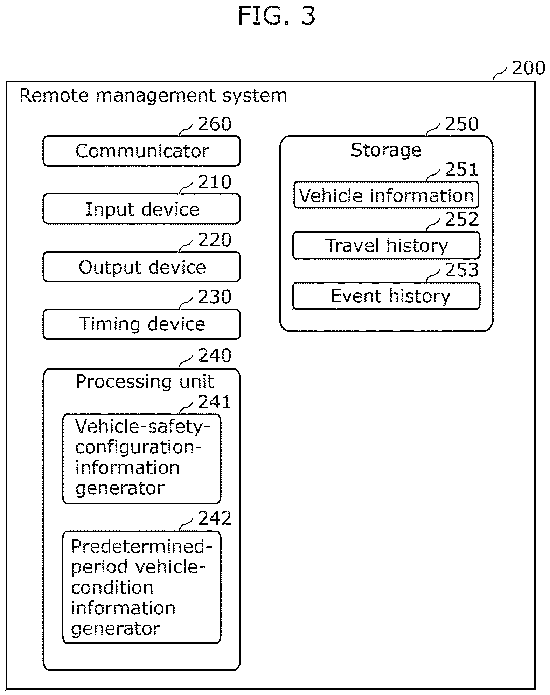

   FIG. 3 is a block diagram showing one example of a configuration of a remote management system according to the embodiment.
[FIG. 4]

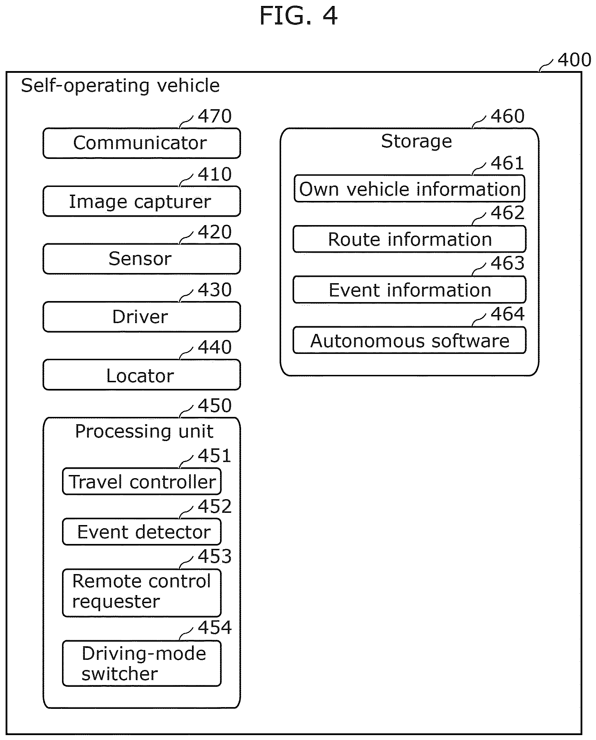

   FIG. 4 is a block diagram showing one example of a configuration of a self-operating vehicle according to the embodiment.
[FIG. 5]

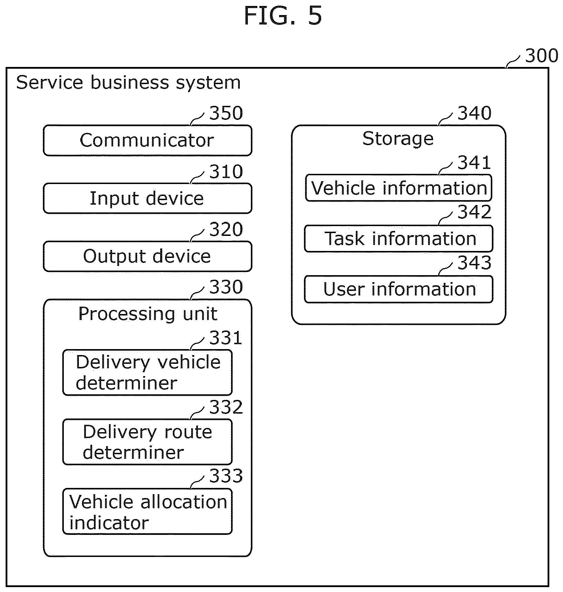

   FIG. 5 is a block diagram showing one example of a configuration of a service business system according to the embodiment.
[FIG. 6]

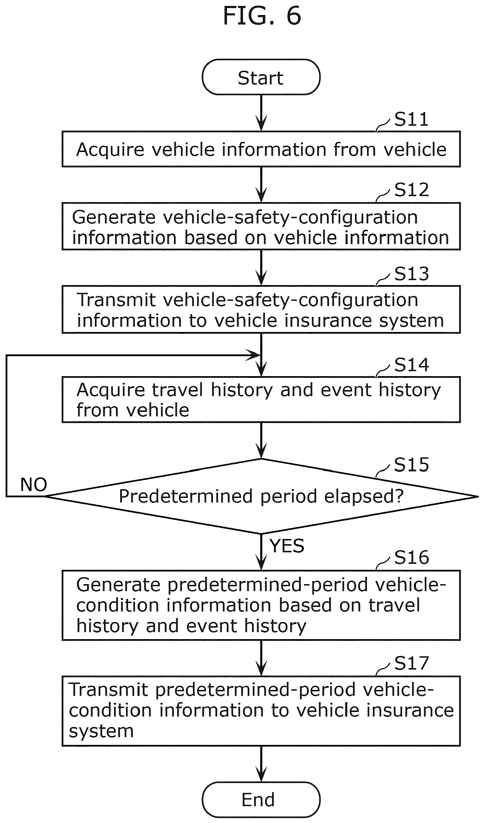

   FIG. 6 is a flowchart showing one example of operation of the remote management system according to the embodiment.
[FIG. 7]

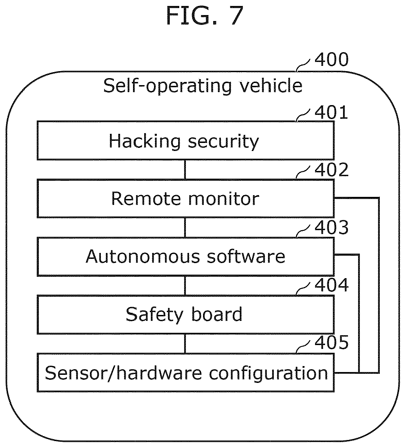

   FIG. 7 is a diagram for describing configurations related to the safety of a self-operating vehicle and included in the self-operating vehicle according to the embodiment.
[FIG. 8]

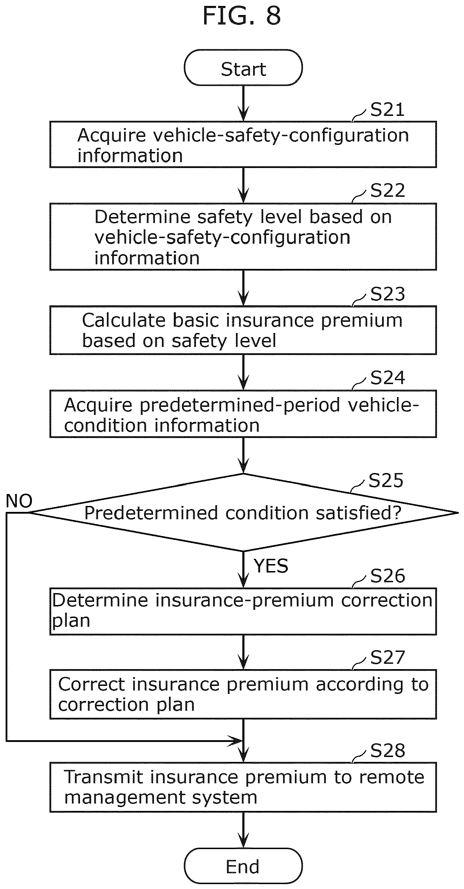

   FIG. 8 is a flowchart showing one example of an insurance-premium calculation method according to the embodiment.
[FIG. 9]

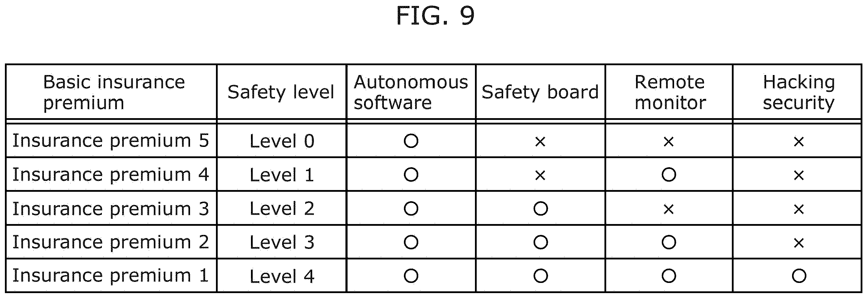

   FIG. 9 is a diagram showing one example of a basic-insurance-premium table.
[FIG. 10]

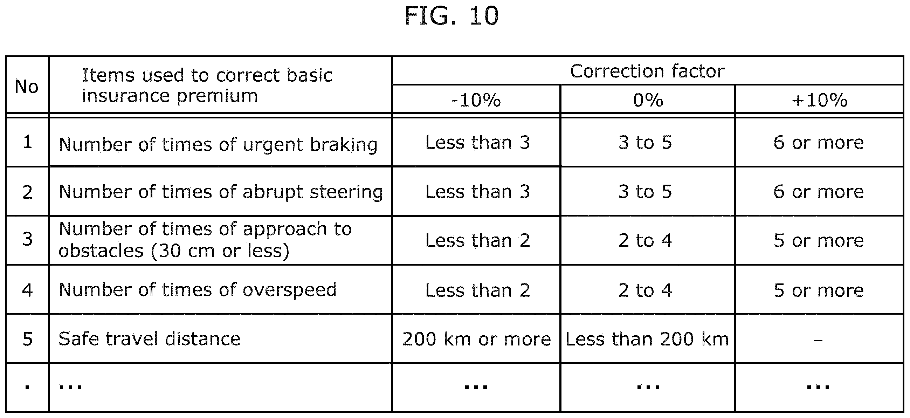

   FIG. 10 is a diagram showing one example of a dynamic-insurance-premium table.

### [Description of Embodiments]

An insurance-premium calculation method according to one aspect of the present disclosure is an insurance-premium calculation method that is executed by a computer and that includes acquiring first information about a configuration included in an autonomous mobile unit, calculating, in accordance with the first information, a first insurance premium on a loss that is possibly be incurred when the autonomous mobile unit is moving, acquiring second information about a condition of the autonomous mobile unit in motion during a first period, calculating a second insurance premium by correcting the first insurance premium in accordance with the second information, and outputting the second insurance premium as an insurance premium for a second period later than the first period.

According to this method, the first insurance premium is first calculated and then the second insurance premium is calculated. The first insurance premium is a basic insurance premium that takes into consideration the configuration included in the autonomous mobile unit (e.g., a configuration related to the safety of the autonomous mobile unit), and the second insurance premium is a dynamic insurance premium obtained by correcting the basic insurance premium in accordance with the condition of the autonomous mobile unit in motion during the first period. As described above, since the insurance premium is calculated in consideration of the configuration included in the autonomous mobile unit and the condition of the autonomous mobile unit in motion during the first period, it is possible to accurately calculate the insurance premium on losses that may be incurred when the autonomous mobile unit is moving.

For example, the first information may include information about a combination of the configuration, redundancy of the configuration, an anti-hacking measure taken for the configuration, performance of the configuration, certification for safety of the configuration, or a modification to the configuration.

As described above, the basic insurance premium can be calculated in consideration of the information about a combination of the configuration of the autonomous mobile unit, redundancy of the configuration, anti-hacking measures taken for the configuration, performance of the configuration, certification for the safety of the configuration, or modifications to the configuration.

For example, the second information may include information about a vehicle condition of the autonomous mobile unit in motion, a circumstance surrounding the autonomous mobile unit in motion, a travel history of the autonomous mobile unit, an occurrence of an event when the autonomous mobile unit is moving, or a request for remote control received from the autonomous mobile unit, the information being acquired during the first period.

As described above, the basic insurance premium can be corrected in consideration of the information about the vehicle condition of the autonomous mobile unit in motion, circumstances surrounding the autonomous mobile unit in motion, the travel history of the autonomous mobile unit, occurrences of events when the autonomous mobile unit is moving, or a request for remote control received from the autonomous mobile unit, the information being acquired during the first period.

For example, in the calculating of the first insurance premium, the first insurance premium may be calculated further in accordance with a function of a remote management system or an operational method of the remote management system, the remote management system remotely managing the autonomous mobile unit.

Since the function of the remote management system or the operational method of the remote management system may affect the insurance premium, the basic insurance premium can be calculated more accurately by taking into consideration the function of the remote management system or the operational method of the remote management system.

For example, in the calculating of the first insurance premium, the first insurance premium may be calculated in accordance with a relationship between a total number of autonomous mobile units, each of which is the autonomous mobile unit, and a total number of operators who remotely monitor or control the autonomous mobile units via the remote management system, a training condition of the operators, or actual working experience of the operators.

The basic insurance premium can be calculated more accurately by taking into consideration the information about the operators who remotely monitor or control the autonomous mobile units via the remote management system.

Specifically, in the case where the operators are small in number or where the autonomous mobile units are large in number, the basic insurance premium is calculated to be high because an accident or any other event is more likely to occur. In other words, in the case where the operators are large in number or where the autonomous mobile units are small in number, the basic insurance premium is calculated to be low because an accident or any other event is less likely to occur.

In the case where the operators lack adequate training, the basic insurance premium is calculated to be high because an accident or any other event is more likely to occur. In other words, in the case where the operators have received adequate training, the basic insurance premium is calculated to be low because an accident or any other event is less likely to occur.

In the case where the operators lack adequate actual working experience, the basic insurance premium is calculated to be high because an accident or any other event is more likely to occur. In other words, in the case where the operators have adequate actual working experience, the basic insurance premium is calculated to be low because an accident or any other event is less likely to occur.

For example, in the calculating of the first insurance premium, the first insurance premium may be calculated in accordance with whether a function of taking over remote monitoring via the remote management system when a request for remote control is received from the autonomous mobile unit is provided, whether an automatic support function of remotely controlling the autonomous mobile unit via the remote management system is provided, whether a function of adding an operator who remotely monitors or controls the autonomous mobile unit via the remote management system is provided, whether a function of enabling the operator to easily recognize occurrence of an event when the autonomous mobile unit is moving is provided, or whether a function of improving safety of a different autonomous mobile unit that is the autonomous mobile unit when the operator is responding to the request is provided.

The basic insurance premium can be calculated more accurately by taking into consideration whether a specific function of the remote management system is provided.

Specifically, in the case where the remote management system does not have the function of taking over remote monitoring, the basic insurance premium is calculated to be high because an accident or any other event is more likely to occur. In other words, in the case where the remote management system has the function of taking over remote monitoring, the basic insurance premium is calculated to be low because an accident or any other event is less likely to occur.

In the case where the remote management system does not have the autonomous support function for remotely controlling the autonomous mobile unit, the basic insurance premium is calculated to be high because an accident or any other event is more likely to occur. In other words, in the case where the remote management system has the autonomous support function for remotely controlling the autonomous mobile unit, the basic insurance premium is calculated to be low because an accident or any other event is less likely to occur.

In the case where the remote management system does not have the function of adding operators, the basic insurance premium is calculated to be high because an accident or any other event is more likely to occur. In other words, in the case where the remote management system has the function of adding operators, the basic insurance premium is calculated to be low because an accident or any other event is less likely to occur.

In the case where the remote management system does not have the function of enabling the operators to easily recognize occurrences of events, the basic insurance premium is calculated to be high because an accident or any other event is more likely to occur. In other words, in the case where the remote management system has the function of enabling the operators to easily recognize occurrences of events, the basic insurance premium is calculated to be low because an accident or any other event is less likely to occur.

In the case where the remote management system does not have the function of improving the safety of other autonomous mobile units when the operators are responding to requests, the basic insurance premium is calculated to be high because an accident or any other event is more likely to occur. In other words, in the case where the remote management system has the function of improving the safety of other autonomous mobile units when the operators are responding to the requests, the basic insurance premium is calculated to be low because an accident or any other event is less likely to occur.

For example, in the calculating of the first insurance premium, the first insurance premium may be calculated in accordance with a total number of base locations for the autonomous mobile unit, the base locations being supported by the remote management system.

The basic insurance premium can be calculated more accurately by taking into consideration the number of base locations for the autonomous mobile unit, the base locations being supported by the remote management system. Specifically, in the case where the base locations are small in number, the basic insurance premium is calculated to be high because an accident or any other event is more likely to occur. In other words, in the case where the base locations are large in number, the basic insurance premium is calculated to be low because n accident or any other event is less likely to occur.

For example, in the calculating of the first insurance premium, the first insurance premium may be calculated in accordance with a total number of dispatched personnel who rush to the autonomous mobile unit upon occurrence of an event when the autonomous mobile unit is moving, a total number of base locations from which the dispatched personnel start to rush, or a time required for the dispatched personnel to rush to the autonomous mobile unit.

The basic insurance premium can be calculated more accurately by taking into consideration the information about the dispatched personnel who rush to the autonomous mobile unit upon occurrence of an event when the autonomous mobile unit is moving.

Specifically, in the case where the dispatched personnel are small in number, the basic insurance premium is calculated to be high because an accident or any other event is more likely to occur. In other words, in the case where the dispatched personnel are large in number, the basic insurance premium is calculated to be low because an accident or any other event is less likely to occur.

In the case where the base locations from which the dispatched personnel start to rush are small in number, the basic insurance premium is calculated to be high because an accident or any other event is more likely to occur. In other words, in the case where the base locations from which the dispatched personnel start to rush are large in number, the basic insurance premium is calculated to be low because an accident or any other event is less likely to occur.

In the case where a long time is required for the dispatched personnel to rush to the autonomous mobile unit, the basic insurance premium is calculated to be high because an accident or any other event is more likely to occur. In other words, in the case where only a short time is required for the dispatched personnel to rush to the autonomous mobile unit, the basic insurance premium is calculated to be low because an accident or any other event is less likely to occur.

For example, in the calculating of the second insurance premium, the second insurance premium may be calculated further in accordance with an operational method of a remote management system that remotely manages the autonomous mobile unit during the first period.

Since the operational method of the remote management system may affect the insurance premium, the basic insurance premium can be calculated more accurately by taking into consideration the operational method of the remote management system .

For example, in the calculating of the second insurance premium, the second insurance premium may be calculated in accordance with information about a relationship between a total number of autonomous mobile units, each of which is the autonomous mobile unit, and a total number of operators who remotely monitor or control the autonomous mobile units via the remote management system, or actual working experience of the operators, the information being acquired during the first period.

The basic insurance premium can be calculated more accurately by taking into consideration the information about the operators who remotely monitor or control the autonomous mobile unit via the remote management system, the information being acquired during the first period.

Specifically, in the case where the operators are small in number or the autonomous mobile units are large in number during the first period, the basic insurance premium is corrected so as to raise the dynamic insurance premium because an accident or any other event is more likely to occur during the second period. In other words, in the case where the operators are large in number or the autonomous mobile units are small in number during the first period, the basic insurance premium is corrected so as to lower the dynamic insurance premium because an accident or any other event is less likely to occur during the second period.

In the case where the operators lack adequate actual working experience during the first period, the basic insurance premium is corrected so as to raise the dynamic insurance premium because an accident or any other event is more likely to occur during the second period. In other words, in the case where the operators have adequate actual working experience during the first period, the basic insurance premium is corrected so as to lower the dynamic insurance premium because an accident or any other event is less likely to occur during the second period.

For example, in the calculating of the second insurance premium, the second insurance premium may be calculated in accordance with information about a total number of times a request for remote control is received from the autonomous mobile unit, a response time required to start to respond to the request, or a recovery time required for the autonomous mobile unit to return to autonomous travel after the request, the information being acquired during the first period.

The basic insurance premium can be calculated more accurately by taking into consideration the information about requests for remote control received from the autonomous mobile unit during the first period.

Specifically, in the case where a request for remote control is received a large number of times during the first period, the basic insurance premium is corrected so as to raise the dynamic insurance premium because an accident or any other event is more likely to occur during the second period. In other words, in the case where a request for remote control is received only a small number of times during the first period, the basic insurance premium is corrected so as to lower the dynamic insurance premium because an accident or any other event is less likely to occur during the second period.

In the case where a long response time is required to start to respond to a request for remote control during the first period, the basic insurance premium is corrected so as to raise the dynamic insurance premium because an accident or any other event is more likely to occur during the second period. In other words, in the case where only a short response time is required to start to respond to a request for remote control during the first period, the basic insurance premium is corrected so as to lower the dynamic insurance premium because an accident or any other event is less likely to occur during the second period.

In the case where a long recovery time is required for the autonomous mobile unit to return to autonomous travel after a request for remote control during the first period, the basic insurance premium is corrected so as to raise the dynamic insurance premium because an accident or any other event is more likely to occur during the second period. In other words, in the case where only a short recovery time is required for the autonomous mobile unit to return to autonomous travel after a request for remote control during the first period, the basic insurance premium is corrected so as to lower the dynamic insurance premium because an accident or any other event is less likely to occur during the second period.

For example, in the calculating of the second insurance premium, the second insurance premium may be calculated in accordance with information about a total number of times dispatched personnel who rush to the autonomous mobile unit are sent to the autonomous mobile unit upon occurrence of a request when the autonomous mobile unit is moving, or a time required for the dispatched personnel to rush to the autonomous mobile unit, the information being acquired during the first period.

The basic insurance premium can be corrected more accurately by taking into consideration the information about the dispatched personnel who rush to the autonomous mobile unit upon occurrence of an event when the autonomous mobile unit is moving, the information being acquired during the first period.

Specifically, in the case where the dispatched personnel are sent to the autonomous mobile unit a large number of times during the first period, the basic insurance premium is corrected so as to raise the dynamic insurance premium because an accident or any other event is more likely to occur during the second period. In other words, in the case where the dispatched personnel are sent to the autonomous mobile unit only a small number of times during the first period, the basic insurance premium is corrected so as to lower the dynamic insurance premium because an accident or any other event is less likely to occur during the second period.

In the case where it takes a long time for the dispatched personnel to rush to the autonomous mobile unit during the first period, the basic insurance premium is corrected so as to raise the dynamic insurance premium because an accident or any other event is more likely to occur during the second period. In other words, in the case where it takes only a short time for the dispatched personnel to rush to the autonomous mobile unit, the basic insurance premium is corrected so as to lower the dynamic insurance premium because an accident or any other event is less likely to occur during the second period.

A program according to one aspect of the present disclosure is a program for causing a computer to execute the insurance-premium calculation method described above.

Thus, it is possible to provide the program that enables accurate calculation of the insurance premium on losses that may be incurred when the autonomous mobile unit is moving.

An insurance-premium calculation system according to one aspect of the present disclosure includes a first acquirer that acquires first information about a configuration included in an autonomous mobile unit, a calculator that calculates, in accordance with the first information, a first insurance premium on a loss that is possibly incurred when the autonomous mobile unit is moving, a second acquirer that acquires second information about a condition of the autonomous mobile unit in motion during a first period, a calculator that calculates a second insurance premium by correcting the first insurance premium in accordance with the second information, and an output device that outputs the second insurance premium as an insurance premium for a second period later than the first period.

Thus, it is possible to provide the insurance-premium calculation system that enables accurate calculation of the insurance premium on losses that may be incurred when the autonomous mobile unit is moving.

Hereinafter, embodiments will be described specifically with reference to the accompanying drawings.

Note that each embodiment described below illustrates one generic or specific example. Numerical values, shapes, materials, constituent elements, positions of constituent elements in arrangements, forms of connection of constituent elements, steps, sequences of steps, and so on in the following embodiments are merely one example, and do not intend to limit the scope of the present disclosure.

### [Embod iments]

An insurance-premium calculation method and an insurance-premium calculation system according to one embodiment will be described hereinafter.

FIG. 1 is a diagram showing an example of application of vehicle insurance system 100 according to an embodiment.

Vehicle insurance system 100 is a system for calculating an insurance premium on losses that may be incurred when self-operating vehicle 400 is moving, in the case where service business system 300 provides services using self-operating vehicle 400 that can be remotely monitored or controlled by remote management system 200. Self-operating vehicle 400 is one example of the autonomous mobile unit.

Service business system 300 is a system of a service business entity. Services provided by the service business entity include the delivery of products or the transportation of persons using self-operating vehicle 400. The following description is given on the assumption that the services correspond to the delivery of products. The services may use, for example, a plurality of self-operating vehicles 400. The service business entity designs service specifications. For example, the service business entity may design the contents of services, target areas, travel routes, the number of vehicles, and specifications about self-operating vehicles 400. The service business entity also prepares self-operating vehicles 400 and provides services. The service business entity receives a delivery request from a delivery client and provides services such as delivering a product to a delivery destination. Processing related to the services is conducted by service business system 300. For example, service business system 300 may determine self-operating vehicle 400 that is used for a delivery request or may send an arrival notification to a recipient at a delivery destination.

Self-operating vehicles 400 start to move when the services are actually started to be provided, but it is conceivable that accidents or events that cannot be handled by self-operating vehicles 400 may occur in self-operating vehicles 400. Such events may occur in cases such as where there are many people around the self-operating vehicles, where the self-operating vehicles travelling on narrow roads have difficulty in passing other vehicles, where there are many blind spots, or where the self-operating vehicles avoid on-street parking vehicles. To take measures against such events, remote management system 200 is used in order to remotely monitor and control self-operating vehicles 400. Note that remote management system 200 may be a system of the service business entity, or may be a system of an external business entity to which services are outsourced by the service business entity. The following description is given on the assumption that remote management system 200 is a system of the service business entity.

For example, the service business entity may sign an insurance contract with an insurance business entity for services using self-operating vehicles 400 that are managed by remote monitoring or remote control, for example. Note that in the case where the management of self-operating vehicles 400 by, for example, remote monitoring or remote control is outsourced to an external business entity, both of the service business entity and the external business entity may be policyholders.

Vehicle insurance system 100 operated by the insurance business entity collects information that is used to calculate insurance premiums from service business system 300 and remote management system 200, and calculates insurance premiums based on the collected information. Vehicle insurance system 100 is one example of the insurance-premium calculation system.

Note that some or all of the functions of vehicle insurance system 100, remote management system 200, and service business system 300 may be included in a single system.

Next, a configuration of vehicle insurance system 100 will be described with reference to FIG. 2.

FIG. 2 is a block diagram showing one example of the configuration of vehicle insurance system 100 according to the embodiment.

Vehicle insurance system 100 is a system for calculating an insurance premium on the basis of information about a configuration related to the safety of self-operating vehicles 400 and information about conditions of self-operating vehicles 400 in motion. Vehicle insurance system 100 is one example of the computer that executes the insurance-premium calculation method. Constituent elements of vehicle insurance system 100 may be provided in a single casing, or may be distributed and arranged in a plurality of casings. In the case where the constituent elements of vehicle insurance system 100 are distributed and arranged in a plurality of casings, the information processing method may be executed by a plurality of computers. For example, vehicle insurance system 100 may be realized by a server.

Vehicle insurance system 100 includes processing unit 110, storage 120, and communicator 130. Vehicle insurance system 100 is a computer that includes, for example, a processor, a communication interface, and a memory. The memory may include, for example, a read only memory (ROM) and a random access memory (RAM) and is capable of storing programs that are executed by the processor. Processing unit 110 is realized by the processor that executes the programs stored in the memory. Storage 120 is realized by the memory. Note that storage 120 may be another memory different from the memory that stores the programs. Storage 120 stores basic-insurance-premium table 121 and dynamic-insurance-premium table 122, but these tables may be stored in different memories. Communicator 130 is realized by the communication interface.

Processing unit 110 includes basic-insurance-premium determiner 111 and insurance-premium corrector 112 as functional constituent elements.

Basic-insurance-premium determiner 111 is one example of the first acquirer that acquires vehicle-safety-configuration information about configurations included in self-operating vehicles 400. One example of the configurations included in self-operating vehicles 400 is a configuration related to the safety of self-operating vehicles 400. The vehicle-safety-configuration information is one example of the first information. Details of the vehicle-safety-configuration information will be described later.

Basic-insurance-premium determiner 111 is one example of the calculator that calculates, in accordance with the vehicle-safety-configuration information, a basic insurance premium on losses that may be incurred when self-operating vehicle 400 is moving. The basic insurance premium is one example of the first insurance premium. Details of the method for calculating the basic insurance premium will be described later.

Insurance-premium corrector 112 is one example of the second acquirer that acquires predetermined-time-period vehicle-condition information about the conditions of self-operating vehicles 400 in motion during a predetermined time period. The predetermined time period is one example of the first period during which information that is used to calculate an insurance premium in the future is acquired. The predetermined-time-period vehicle-condition information is one example of the second information. Details of the predetermined-time-period vehicle-condition information will be described later.

Insurance-premium corrector 112 is also one example of the calculator that calculates a dynamic insurance premium by correcting the basic insurance premium in accordance with the predetermined-time-period vehicle-condition information. The dynamic insurance premium is one example of the second insurance premium. Details of the method for correcting the basic insurance premium, i.e., the method for calculating the dynamic insurance premium, will be described later.

Storage 120 stores basic-insurance-premium table 121 and dynamic-insurance-premium table 122. Basic-insurance-premium table 121 is a table used to calculate the basic insurance premium, and the dynamic-insurance-premium table 122 is a table used to correct the basic insurance premium. Details of basic-insurance-premium table 121 and dynamic-insurance-premium table 122 will be described later.

Communicator 130 is one example of the output device that outputs the dynamic insurance premium as an insurance premium for an application period later than the predetermined time period. The application period is one example of the second period during which the output insurance premium is applied. For example, in the case where the insurance premium is updated monthly, the predetermined time period may be a given month (e.g., January) and the application period may be the next month (e.g., February). For example, communicator 130 may receive the vehicle-safety-configuration information and the predetermined-time-period vehicle-condition information from remote management system 200 and transmits a calculated insurance premium to either or both of remote management system 200 and service business system 300.

Next, a configuration of remote management system 200 will be described with reference to FIG. 3.

FIG. 3 is a block diagram showing one example of the configuration of remote management system 200 according to the embodiment.

Remote management system 200 is a system for managing self-operating vehicles 400 used in services provided by the service business entity by, for example, remote monitoring and remote control. Constituent elements of remote management system 200 may be provided in a single casing, or may be distributed and arranged in a plurality of casings.

Remote management system 200 includes input device 210, output device 220, timing device 230, processing unit 240, storage 250, and communicator 260.

Input device 210 may include, for example, handles, accelerators, or brakes that are operated by operators who remotely control self-operating vehicles 400. By operating these tools, the operators are able to remotely control self-operating vehicles 400. Input device 210 may also be any other input interface for inputting various types of information.

Output device 220 may, for example, be a display viewed by operators who remotely monitor or control self-operating vehicles 400, and displays a map that indicates the locations of self-operating vehicles 400 that are being monitored, or images or video captured by cameras mounted on self-operating vehicles 400 that are being monitored. Output device 220 may also be any other output interface for outputting various types of information.

Timing device 230 measures a predetermined time period that is a time period during which the predetermined-time-period vehicle-condition information is acquired. For example, the predetermined time period may be a time period that is set by the insurance business entity and acquired from vehicle insurance system 100.

Processing unit 240 includes vehicle-safety-configuration information generator 241 and predetermined-time-period vehicle-condition information generator 242 as functional constituent elements.

Vehicle-safety-configuration information generator 241 generates vehicle-safety-configuration information on the basis of vehicle information 251 stored in storage 250. Details of vehicle-safety-configuration-information generator 241 will be described later.

Predetermined-time-period vehicle-condition information generator 242 generates predetermined-time-period vehicle-condition information on the basis of travel history 252 and event history 253 that are stored in storage 250. Details of predetermined-time-period vehicle-condition-information generator 242 will be described later.

Storage 250 stores vehicle information 251, travel history 252, and event history 253.

Vehicle information 251 is information about, for example, identification numbers and vehicle types of self-operating vehicles 400 and hardware configuration and software configuration of self-operating vehicles 400. Vehicle information 251 may be acquired from self-operating vehicles 400 or may be acquired from terminals (not shown) held by managers of self-operating vehicles 400. For example, in the case where the service business entity holds self-operating vehicles 400, vehicle information 251 may be acquired from the service business entity, and in the case where the service business entity rents self-operating vehicles 400, vehicle information 251 may be acquired from a rental business entity.

Travel history 252 may, for example, be information about vehicle conditions (e.g., the presence or absence of abnormalities, velocities, and battery conditions) of self-operating vehicles 400 in motion, circumstances surrounding self-operating vehicles 400 in motion (e.g., the presence or absence of obstacles and the distances to the obstacles), travel routes, and distances travelled.

Event history 253 may, for example, be information about occurrences of events (e.g., the presence or absence of events and the type of each event) and requests for remote control (e.g., request times and places for remote control, and time periods of remote control).

Communicator 260 receives information such as vehicle information 251, travel history 252, and event history 253 from self-operating vehicles 400. Note that communicator 260 may receive vehicle information 251 from the service business entity or the rental business entity of self-operating vehicles 400. Communicator 260 also transmits the vehicle-safety-configuration information and the predetermined-time-period vehicle-condition information to vehicle insurance system 100.

Next, a configuration of each self-operating vehicle 400 will be described with reference to FIG. 4.

FIG. 4 is a block diagram showing one example of the configuration of one self-operating vehicle 400 according to the embodiment.

Self-operating vehicle 400 is a vehicle that is used in services provided by the service business entity and is remotely monitored and controlled via remote management system 200.

Self-operating vehicle 400 includes image capturer 410, sensor 420, driver 430, locator 440, processing unit 450, storage 460, and communicator 470.

Image capturer 410 may, for example, be a camera that captures an image of the circumstances surrounding self-operating vehicle 400. The image or video obtained by image capture with image capturer 410 is used to detect obstacles and is also used to provide a display for an operator during remote monitoring and remote control.

Sensor 420 may, for example, be a light detection and ranging (LiDAR) sensor, a millimeter wave radar, an inclination sensor, an acceleration sensor, or a velocity sensor.

Driver 430 may include, for example, a motor and an engine that are used to move self-operating vehicle 40.

Locator 440 is a global positioning system (GPS) and used to identify the location of self-operating vehicle 400.

Processing unit 450 includes travel controller 451, event detector 452, remote control requester 453, and driving-mode switcher 454.

Travel controller 451 controls autonomous travel of self-operating vehicle 400, using the image or video obtained by image capture with image capturer 410, sensor 420, locator 440, and autonomous software 464.

Event detector 452 detects occurrences of events that request remote monitoring or remote control from remote management system 200. For example, event detector 452 detects the occurrence of an event when self-operating vehicle 400 is incapable of making a decision by itself (e.g., when there are many people around the vehicle, when the self-operating vehicle travelling on a narrow road has difficulty in passing other vehicles, when there are many blind spots, or when the self-operating vehicle avoids on-street parking vehicles). For example, event detector 452 may also detect the occurrence of an event when the self-operating vehicle is travelling in places that are determined in advance to be handled by remote control (e.g., when the self-operating vehicle is approaching a pedestrian crossing or an intersection). For example, event detector 452 may also detect the occurrence of an event when the self-operating vehicle is travelling in places that are determined in advance to require remote monitoring (e.g., when the self-operating vehicle is travelling in places where there are many people or where the self-operating vehicle is travelling on narrow roads).

Remote control requester 453 requests remote control from remote management system 200 when event detector 452 has detected the occurrence of an event that requires remote control. For example, remote control requester 453 requests remote control from remote management system 200 in cases such as where self-operating vehicle 400 is incapable of making a decision by itself or where the self-operating vehicle is travelling in places that are determined in advance to be handled by remote control.

Driving-mode switcher 454 is a processing unit that switches the driving mode and switches between a remote control mode and an automatic operation mode. In the automatic operation mode, self-operating vehicle 400 is caused to travel autonomously by autonomous software 464. In the remote control mode, self-operating vehicle 400 travels in accordance with a remote control instruction received from remote management system 200.

Storage 460 stores own vehicle information 461, route information 462, event information 463, and autonomous software 464.

Own vehicle information 461 is information about self-operating vehicle 400, such as the identification number and vehicle type of self-operating vehicle 400 and hardware configuration and software configuration of self-operating vehicle 400.

Route information 462 is travel route information included in a vehicle allocation instruction received from service business system 300. Note that route information 462 may be travel route information created by self-operating vehicle 400 on the basis of information about a delivery source and a delivery destination acquired by self-operating vehicle 400.

Event information 463 is information about the history of events that necessitate remote control.

Autonomous software 464 is software for autonomous travel.

Communicator 470 transmits own vehicle information 461, route information 462, and event information 463 to remote management system 200. Communicator 470 also transmits a request for remote control to remote management system 200. Communicator 470 also receives a remote control instruction from remote management system 200.

Next, a configuration of service business system 300 will be described with reference to FIG. 5.

FIG. 5 is a block diagram showing one example of the configuration of service business system 300 according to the embodiment.

Service business system 300 is a system for managing and operating information about services using self-operating vehicles 400. Constituent elements of service business system 300 may be provided in a single casing, or may be distributed and arranged in a plurality of casings.

Service business system 300 includes input device 310, output device 320, processing unit 330, storage 340, and communicator 350.

Input device 310 is an input interface used to, for example, check and change service conditions. For example, input device 310 may change a vehicle allocation instruction.

Output device 320 is an output interface for outputting, for example, delivery information and vehicle conditions to persons in charge of the service business entity and enables the persons in charge to monitor, for example, the delivery information and the vehicle conditions.

Processing unit 330 includes delivery vehicle determiner 331, delivery route determiner 332, and vehicle allocation indicator 333.

Delivery vehicle determiner 331 determines a delivery vehicle (self-operating vehicle 400) that is used for delivery, on the basis of the delivery request received from a user.

Delivery route determiner 332 determines a delivery route on the basis of the delivery vehicle determined and the delivery request received from a user.

Vehicle allocation indicator 333 issues a delivery instruction that includes a delivery route to a delivery vehicle.

Storage 340 stores vehicle information 341, task information 342, and user information 343.

Vehicle information 341 is information about self-operating vehicle 400 such as identification information, vehicle type, location, and service conditions (e.g., delivery waiting, in delivery, or out of service).

Task information 342 may include information for identifying a task (vehicle allocation request) and information about task conditions (e.g., delivery waiting, in delivery, or out of service), task type (e.g., the transportation of persons or the delivery of products), and delivery destination and source (e.g., the locations of the delivery destination and source, or the user names of the delivery destination and source).

User information 343 is information about users such as user identification information, user name, and user's address.

Communicator 350 receives delivery requests (e.g., a starting location, a destination location, and a desired departure time) from user terminals. Communicator 350 also transmits delivery instructions (e.g., shipment locations, delivery destinations, travel routes, departure times, and estimated times of arrival) to self-operating vehicles 400.

Next, operation of remote management system 200 will be described with reference to FIG. 6.

FIG. 6 is a flowchart showing one example of operation of remote management system 200 according to the embodiment.

First, vehicle-safety-configuration-information generator 241 acquires vehicle information 251 that corresponds to, for example, own vehicle information 461 received by communicator 260 from self-operating vehicle 400 (step S11).

Then, vehicle-safety-configuration-information generator 241 generates vehicle-safety-configuration information based on vehicle information 251 (step S12). The vehicle-safety-configuration information is information about configurations related to the safety of self-operating vehicle 400, the configuration being included in self-operating vehicle 400. Here, the configurations related to the safety of self-operating vehicle 400 will be described with reference to FIG. 7.

FIG. 7 is a diagram for describing the configurations related to the safety of self-operating vehicle 400 and included in self-operating vehicle 400.

For example, the configurations related to the safety of self-operating vehicle 400 may include hacking security 401, remote monitor 402, autonomous software 403, safety board 404, and sensor/hardware configuration 405.

Hacking security 401 is software that defends operation by unauthorized commands from outside sources.

Remote monitor 402 is a mechanism for remotely monitoring abnormal operations (abnormal values for, for example, velocity, acceleration, steering angle, inclination, and delay) of self-operating vehicle 400 and is a configuration that monitors signs of abnormal operations, using artificial intelligence (AI) in cooperation with the computer of remote management system 200.

Autonomous software 403 is software for controlling autonomous travel of self-operating vehicle 400, and controls autonomous travel of self-operating vehicle 400, such as velocity, acceleration, steering, and stop, on the basis of, for example, information detected by the sensor, own location information, and map information. Autonomous software 403 is also software for realizing redundancy control.

Safety board 404 controls urgency stops or power stops on the basis of information such as velocity anomalies, acceleration anomalies, steering anomalies, or vibration anomalies.

Sensor/hardware configuration 405 includes, for example, sensors for measuring obstacles or own location such as an LiDAR sensor, a camera, and a millimeter wave radar, and a By-wire system such as velocity and acceleration controllers, brakes, and steering.

For example, the vehicle-safety-configuration information includes information about a combination of these configurations, redundancy of these configurations, anti-hacking measures taken for these configuration, the performance of these configurations, certification for the safety of these configurations, or modifications to these configurations.

Referring back to the description with reference to FIG. 6, communicator 260 transmits the vehicle-safety-configuration information to vehicle insurance system 100 (step S13). This allows vehicle insurance system 100 to calculate a basic insurance premium, the details of which will be described later.

Then, predetermined-time-period vehicle-condition information generator 242 acquires travel history 252 and event history 253 that correspond to the information received by communicator 260 from self-operating vehicle 400, such as own vehicle information 461, route information 462, and event information 463 (step S14).

Then, predetermined-time-period vehicle-condition information generator 242 determines whether a predetermined time period has elapsed (step S15).

If it is determined that the predetermined time period has not yet elapsed (No in step S15), travel history 252 and event history 253 are acquired until the predetermined time period elapses. That is, in steps S14 and S15, travel history 252 and event history 253 during the predetermined time period are acquired.

If it is determined that the predetermined time period has elapsed (Yes in step S15), predetermined-time-period vehicle-condition-information generator 242 generates the predetermined-time-period vehicle-condition information. The predetermined-time-period vehicle-condition information is information about the conditions of self-operating vehicle 400 in motion during the predetermined time period. Specifically, the predetermined-time-period vehicle-condition information includes information about the vehicle conditions of self-operating vehicle 400 in motion, circumstances surrounding self-operating vehicle 400 in motion, the travel history of self-operating vehicle 400, occurrences of events when self-operating vehicle 400 is moving, or a request for remote control received from self-operating vehicle 400, the information being acquired during the predetermined time period.

Then, communicator 260 transmits the predetermined-time-period vehicle-condition information to vehicle insurance system 100 (step S17). This allows vehicle insurance system 100 to correct the basic insurance premium, the details of which will be described later. Note that vehicle insurance system 100 corrects the basic insurance premium by determining whether the conditions of self-operating vehicle 400 in motion during the predetermined time period satisfies a predetermined condition. Since the predetermined-time-period vehicle-condition information may also include information that is unnecessary to determine whether the conditions of self-operating vehicle 400 in motion during the predetermined time period satisfies the predetermined condition, it is also possible to extract only information that can be used to determine whether the conditions of self-operating vehicle 400 in motion during the predetermined time period satisfies the predetermined condition and to transmit the extracted information to vehicle insurance system 100. In this case, remote management system 200 previously acquires, from vehicle insurance system 100, information that indicates the type of information that can be used to determine whether the conditions of self-operating vehicle 400 in motion during the predetermined time period satisfies the predetermined condition.

Note that although one example is described in which remote management system 200 generates the vehicle-safety-configuration information and the predetermined-time-period vehicle-condition information, a configuration is also possible in which self-operating vehicles 400 generate the vehicle-safety-configuration information and the predetermined-time-period vehicle-condition information and transmit the generated vehicle-safety-configuration information and predetermined-time-period vehicle-condition information to remote management system 200.

Next, operation of vehicle insurance system 100 will be described with reference to FIG. 8.

FIG. 8 is a flowchart showing one example of operation of vehicle insurance system 100 according to the embodiment. Note that, since the insurance-premium calculation method is the method executed by vehicle insurance system 100 (computer), FIG. 8 is also a flowchart showing one example of the insurance-premium calculation method according to the embodiment.

First, basic-insurance-premium determiner 111 acquires the vehicle-safety-configuration information received by communicator 130 from remote management system 200 (step S21) and calculates, on the basis of the vehicle-safety-configuration information, the basic insurance premium on losses that may be incurred when self-operating vehicle 400 is moving. For example, the basic insurance premium is calculated by performing processing in steps S22 and S23.

Basic-insurance-premium determiner 111 determines a safety level on the basis of the vehicle-safety-configuration information (step S22). For example, basic-insurance-premium determiner 111 may use basic-insurance-premium table 121 to determine the safety level. Then, basic-insurance-premium determiner 111 calculates the basic insurance premium on the basis of the safety level (step S23). Here, basic-insurance-premium table 121 will be described with reference to FIG. 9.

FIG. 9 is a diagram showing one example of basic-insurance-premium table 121.

For example, the safety level may be determined based on a combination of the configurations related to the safety of self-operating vehicle 400. In FIG. 9, the white circles indicate that the self-operating vehicle includes a corresponding configuration, and the crosses indicate that the self-operating vehicle does not include a corresponding configuration. Note that any combination shown in FIG. 9 is assumed to include sensor/hardware configuration 405. It is also assumed, for example, that the value 0 indicates the lowest safety level and the value 4 indicates the highest safety level.

In the case where self-operating vehicle 400 includes a combination of autonomous software 403 and sensor/hardware configuration 405 as the configurations, the safety level is set to 0. In this case, for example, an automatic braking function supported by hardware is realized, but that alone makes the safety level low.

In the case where self-operating vehicle 400 includes a combination of autonomous software 403, remote monitor 402, and sensor/hardware configuration 405 as the configurations, the safety level is set to 1. In this case, for example, automatic braking supported by hardware is realized and remote monitoring is conducted, but those alone are insufficient and the safety level is set to a low value.

In the case where self-operating vehicle 400 includes a combination of autonomous software 403, safety board 404, and sensor/hardware configuration 405 as the configurations, the safety level is set to 2. In this case, for example, both of the automatic braking function supported by hardware and the automatic braking function supported by software function are realized, and the safety level is set to a normal value.

In the case where self-operating vehicle 400 includes a combination of autonomous software 403, safety board 404, remote monitor 402, and sensor/hardware configuration 405 as the configurations, the safety level is set to 3. In this case, for example, both of the automatic braking function supported by hardware and the automatic braking function supported by software are realized and remote monitoring is performed. Thus, the safety level is set to be high to some extent.

In the case where self-operating vehicle 400 includes a combination of autonomous software 403, safety board 404, remote monitor 402, hacking security 401, and sensor/hardware configuration 405 as the configurations, the safety level is set to 4. In this case, for example, both of the automatic braking function supported by hardware and the automatic braking function supported by software are realized, remote monitoring is conducted, and anti-hacking measures are taken. Thus, the safety level is set to a high value.

In this way, the safety level is determined based on the combination of the configurations related to the safety of self-operating vehicle 400. Note that, although FIG. 9 shows an example in which the safety level is set to 1 for the combination of autonomous software 403, remote monitor 402, and sensor/hardware configuration 405, and set to 2 for the combination of autonomous software 403, safety board 404, and sensor/hardware configuration 405, the present disclosure is not limited to this example. For example, the safety level may be set to 2 for the combination of autonomous software 403, remote monitor 402, and sensor/hardware configuration 405, and may be set to 1 for the combination of autonomous software 403, safety board 404, and sensor/hardware configuration 405.

As illustrated in FIG. 9, for example, each safety level may be associated with an insurance premium in basic-insurance-premium table 121, and in this case, basic-insurance-premium determiner 111 is capable of using basic-insurance-premium table 121 to calculate the insurance premium corresponding to the determined safety level as the basic insurance premium. It is assumed, for example, that insurance premium 5 indicates the highest price, and insurance premium 1 indicates the lowest price. Safety level 4 indicates a high degree of measure for safety and thus corresponds to a low insurance premium, and safety level 0 indicates a low degree of measure for safety and thus corresponds to a high insurance premium. This indicates that the lower the safety level, the higher the basic insurance premium will be calculated. Note that the insurance premium includes insurance premiums on property damage due to accidents, injury or death due to accidents, and service losses.

Note that the basic insurance premium may be calculated based on the presence or absence of redundancy of the configurations related to the safety of self-operating vehicle 400. For example, in the case where it is possible to compensate for a failure in the automatic braking function supported by software by the automatic braking function supported by hardware, the basic insurance premium may be calculated to be low.

Alternatively, the basic insurance premium may be calculated based on the presence or absence of anti-hacking measures taken for the configurations related to the safety of self-operating vehicle 400. For example, in the case where anti-hacking measures are instituted, the basic insurance premium may be calculated to be low.

As another alternative, the basic insurance premium may be determined based on the performance of the configurations related to the safety of self-operating vehicle 400. In the case where the performance of the configurations is high, the basic insurance premium may be calculated to be low.

As yet another alternative, although the example of using a plurality of self-operating vehicles 400 is given, self-operating vehicles 400 may include vehicles having different safety levels. In this case, the basic insurance premium may be calculated according to the ratio of the number of self-operating vehicles 400 for each safety level. Specifically, in the case where the system uses one self-operating vehicle 400 with safety level 3 and one self-operating vehicle with safety level 2, the basic insurance premium may be calculated using the following expression: (basic insurance premium in the case of using self-operating vehicles 400 that all have safety level 3 ÷ 2) + (basic insurance premium in the case of using self-operating vehicles 400 that all have safety level 2 ÷ 2).

Referring back to the description with reference to FIG. 8, insurance-premium corrector 112 acquires the predetermined-time-period vehicle-condition information received by communicator 130 from remote management system 200 (step S24) and determines whether the condition of self-operating vehicle 400 in motion during the predetermined time period, which is indicated by the predetermined-time-period vehicle-condition information, satisfies a predetermined condition (step S25). For example, insurance-premium corrector 112 may use dynamic-insurance-premium table 122 to determine whether the condition of self-operating vehicle 400 in motion during the predetermined time period satisfies the predetermined condition. Here, dynamic-insurance-premium table 122 will be described with reference to FIG. 10.

FIG. 10 is a diagram showing one example of dynamic-insurance-premium table 122.

FIG. 10 shows information acquired during the predetermined time period as items used to correct the basic insurance premium, the information including the number of times emergency braking has occurred, the number of times abrupt steering has occurred, the number of times the self-operating vehicle has approached obstacles (30 cm or less), the number of times overspeed has occurred, and the safe travel distance. These items are one example of the conditions of self-operating vehicle 400 in motion during the predetermined time period. Whether these items satisfy predetermined conditions is determined using dynamic-insurance-premium table 122. Referring to, for example, the number of times emergency braking has occurred, it is determined whether the number of times emergency braking has occurred while the self-operating vehicle is moving during the predetermined time period is less than three or greater than or equal to six as a predetermined condition.

Note that in the case of using a plurality of self-operating vehicles 400, the number of times or the distance used as an item to correct the basic insurance premium may be a total number of times or a total distance for the plurality of self-operating vehicles 400, or may be an average number of times or an average distance for the plurality of self-operating vehicles 400. As another alternative, the number of times or the distance used as an item to correct the basic insurance premium may be the ratio of the number of times or the distance with respect to a total number of deliveries conducted during the predetermined time period.

The predetermined conditions are not limited to conditions based on predetermined threshold values (e.g., less than three or greater than or equal to six), and may be conditions that are based on a comparison with the conditions of self-operating vehicle 400 in motion during the previous predetermined time period (e.g., greater or smaller than the previous value). For example, in the case where the insurance premium is updated monthly and the current predetermined time period is January, the previous predetermined time period is December, and a comparison is made between the conditions of self-operating vehicle 400 in motion during December and the conditions of self-operating vehicle 400 in motion during January.

Referring back to the description with reference to FIG. 8, if the conditions of self-operating vehicle 400 in motion during the predetermined time period do not satisfy the predetermined conditions (No in step S25), the basic insurance premium is not corrected, and the procedure proceeds to step S28. To describe this using the item of emergency braking in FIG. 10 by way of example, if the number of times emergency braking has occurred is in the range of three to five, the predetermined condition is not satisfied and the correction factor for the basic insurance premium becomes 0%, i.e., the basic insurance premium is not corrected.

If the conditions of self-operating vehicle 400 in motion during the predetermined time period satisfy the predetermined conditions (Yes in step S25), insurance-premium corrector 112 determines a correction policy for the basic insurance premium (step S26). To describe this using the item of emergency braking in FIG. 10 by way of example, if the number of times emergency braking has occurred is less than three, insurance-premium corrector 112 determines the correction factor for the basic insurance premium to be -10%, and if the number of times emergency braking has occurred is greater than or equal to six, insurance-premium corrector 112 determines the correction factor for the basic insurance premium to be +10%.

Then, insurance-premium corrector 112 corrects the basic insurance premium according to the correction policy to calculate the dynamic insurance premium, which is obtained by correcting the basic insurance premium (step S27). That is, insurance-premium corrector 112 determines the insurance premium calculated by multiplying the basic insurance premium by the correction factor determined in step S26 as the dynamic insurance premium.

Then, communicator 130 outputs (transmits) the dynamic insurance premium to remote management system 200 as the insurance premium for the application period later than the predetermined time period (step S28). Note that communicator 130 may transmit the insurance premium to service business system 300. This allows the service business entity or the like to confirm the insurance premium calculated in consideration of the configurations included in self-operating vehicle 400 and the conditions of self-operating vehicle 400 in motion during the predetermined time period.

As described above, first the basic insurance premium is calculated in consideration of the configurations included in self-operating vehicle 400 (e.g., configurations related to the safety of self-operating vehicle 400), and then the dynamic insurance premium is calculated by correcting the basic insurance premium in accordance with the conditions of self-operating vehicle 400 in motion during the predetermined time period. In this way, the insurance premium is calculated in consideration of the configurations included in self-operating vehicle 400 and the conditions of self-operating vehicle 400 in motion during the predetermined time period. Accordingly, it is possible to accurately calculate the insurance premium on losses that may be incurred when self-operating vehicle 400 is moving.

For example, the following ways of calculation are possible. (i) In early stages of service provision, travel data on mobile units and remote management data have not yet been accumulated enough, and therefore the degree of risks and the possibility of risks such as nonperformance of services are unknown. Thus, the insurance premium is calculated and set to be higher than an average value on the basis of the aforementioned configurations of the systems and skills and experiences of remotely monitoring operators who operate services. (ii) In the case where the travel data and the remote management data have been accumulated enough during service operation and if there is no potential accident situation, accident, nor nonperformance of services, the insurance premium may be set to an average value, or may be set to be lower than the average value. (iii) If the range or function of providing services is expanded during continuation of service provision, the convenience of customers improves, but the travel data and the remote management data that are used to evaluate possible risks that may be present in the expanded range and function have not yet been accumulated enough. Thus, the insurance premium is again set to be high with higher priority given to safety.

That is, the insurance-premium calculation method and vehicle insurance system 100 according to the present disclosure allow the service business entity to cover risks on the basis of various types of data obtained from service operation times and experiences, and offer convenience to users such as offering insurance against accidents and nonperformance of services. Besides, this method and system also enable setting the dynamic insurance premium in accordance with time-series changes in risk and cost during service provision, and accordingly facilitate trade-off determination of risks, costs, and the convenience of customers in uncertain services such as automatic travel.

### Other Examples of Method of Calculating Basic Insurance Premium

Note that the method of calculating the basic insurance premium is not limited to the example described above.

For example, the basic insurance premium may be calculated based on the presence or absence of certification for the safety of the configurations related to the safety of self-operating vehicle 400. In other words, the base insurance premium may be calculated based on whether the configurations related to the safety of self-operating vehicle 400 are certified to satisfy predetermined safety criteria or to have completed predetermined validation. For example, if the configurations related to the safety of self-operating vehicle 400 satisfy the predetermined safety criteria or have completed predetermined validation, safety improves and accordingly the basic insurance premium is set to be low.

For example, a certification test for the redundancy of sensor/hardware configuration 405 may be conducted by hiding some of a plurality of sensors such as an LiDAR sensor or a camera and measuring whether it is possible to stop the self-operating vehicle upon detection of an obstacle. Also, for example, a certification test for safety board 404 as to whether certified safety board 404 is mounted on the self-operating vehicle may be conducted by checking a certification code embedded in safety board 404 from the outside. Also, for example, a certification for autonomous software 403 as to whether certified autonomous software 403 is mounted on the self-operating vehicle may be conducted by accessing the software in a test mode from the outside and checking a certification code embedded in the software. Also, for example, a certification for remote monitor 402 as to whether the self-operating vehicle operates in response to instructions to stop and to run received from remote management system 200 may be conducted by checking whether remote management system 200 is capable of replying numeric values or words provided around self-operating vehicle 400. Also, for example, a certification test for hacking security 401 may be conducted by measuring whether the self-operating vehicle does not perform any abnormal operation in response to commands such as a steering command, a velocity/acceleration indicating command, and a braking command even if a given interfering command is transmitted via a network to the self-operating vehicle.

For example, validation may be conducted by issuing an abrupt acceleration instruction, an abrupt handling instruction, or an abrupt braking instruction and checking whether the system of self-operating vehicle 400 enters an anomaly detection state and stops or whether remote management system 200 issues an instruction to stop this system. Alternatively, validation may also be conducted by transmitting a hacking command (interfering command) from a network and checking whether the system of self-operating vehicle 400 exhibits the detection of an anomaly and operates normally.

Moreover, a license may be displayed to announce the completion of the certification or the completion of the validation. Alternatively, periodical checks may be conducted to determine whether the system of the self-operating vehicle does not deviate from the certified level. As another alternative, whether any modification is made to the configurations related to the safety of self-operating vehicle 400 may be monitored at all times, using the communication function. As yet another alternative, software may be embedded in the self-operating vehicle in order to check whether the configurations related to the safety of self-operating vehicle 400 are not detached from the vehicle and to regularly conduct validation of this function.

Alternatively, the basic insurance premium may be calculated based on the function of remote management system 200 or the operational method of remote management system 200 that remotely manages self-operating vehicles 400.

For example, the basic insurance premium may be calculated based on the relationship of the number of self-operating vehicles 400 and the number of operators who remotely monitor or control self-operating vehicles 400 via remote management system 200. Specifically, the basic insurance premium may be calculated according to the number of self-operating vehicles 400 remotely monitored by one operator. The number of self-operating vehicles 400 remotely monitored by one operator is calculated by dividing the number of self-operating vehicles 400 remotely monitored by the number of operators. The larger the number of self-operating vehicles 400 remotely monitored by one operator, the higher the possibility that the operator overlooks anomalies in self-operating vehicles 400 and is late in taking measures. Accordingly, an accident becomes more likely to occur. Thus, the basic insurance premium is calculated to be higher with increasing number of self-operating vehicles 400 remotely monitored by one operator.

Note that, since one self-operating vehicle 400 may be remotely monitored by N (two or more) operators, the basic insurance premium may be calculated according to the number of self-operating vehicles 400 remotely monitored by N operators. Or, the basic insurance premium may be calculated according to the number of operators who remotely operate one self-operating vehicle 400. Note that the basic insurance premium may be calculated according to the number of operators who remotely operate M (two or more) self-operating vehicles 400. Or, the basic insurance premium may be calculated according to the number of operators for each task, such as the number of operators who remotely monitor self-operating vehicle(s) and the number of operators who remotely control the self-operating vehicle(s).

For example, the basic insurance premium may be calculated based on whether the function of taking over remote monitoring via remote management system 200 when a request for remote control is received from self-operating vehicle 400 is provided. Specifically, this function is a function that enables one of a plurality of operators who are remotely monitoring self-operating vehicles to respond to a request upon receipt of the request and to have the other operators take over remote monitoring of the self-operating vehicles that have been remotely monitored by the one operator.

For example, in the case where two operators A and B remotely monitor ten self-operating vehicles 400, five for each operator, and operator A has received a request from one of remotely monitored self-operating vehicles 400, operator A takes charge of remote control of one self-operating vehicle 400 concerned, and operator B takes over the remote monitoring of four self-operating vehicles 400 other than one self-operating vehicle 400 concerned among five self-operating vehicles 400 that have been remotely monitored by operator A. This takeover may be carried out by, for example, changing a monitor screen viewed by operator B such that operator B becomes able to remotely monitor four self-operating vehicles 400 described above.

Note that, for example in the case where two operators A and B remotely monitor ten self-operating vehicles 400 together and a request is received from one of ten self-operating vehicles 400, operator A may take charge of remote control of one self-operating vehicle 400 concerned, and operator B may remotely monitor nine self-operating vehicles 400 other than one self-operating vehicle 400 concerned. In this case, for example, a monitor screen viewed by operator B may be changed such that one self-operating vehicle 400 concerned is excluded from the monitor screen viewed by operator B.

For example, the basic insurance premium may be calculated based on the number of base locations supported by remote management system 200. For example, in the case where one remote management system 200 is arranged for one base location (area), the basic insurance premium is calculated to be low because one remote management system 200 is capable of intensively managing self-operating vehicles 400 in one base location and accordingly improves safety. For example, in the case where one remote management system 200 is arranged for a plurality of base locations (areas), the basic insurance premium is calculated to be high because one remote management system 200 needs to manage self-operating vehicles 400 in the plurality of base locations and accordingly safety decreases.

For example, the basic insurance premium may be calculated based on the number of dispatched personnel who are able to rush to self-operating vehicle 400 upon occurrence of an event when self-operating vehicle 400 is moving. Basically, remote management system 200 supports the occurrences of events by remote control, but in the case where events cannot be supported even by remote control, dispatched personnel rush to self-operating vehicle 400 for support. At this time, the larger the number of dispatched personnel, the shorter the delay for support and the lower the risk. Thus, in this case, the basic insurance premium is calculated to be low.

For example, the basic insurance premium may be calculated based on the number of base locations from which the dispatched personnel start to rush. The larger the number of base locations from which the dispatched personnel start to rush, the shorter the delay for support and the lower the risk. Thus, in this case, the basic insurance premium is calculated to be low. Note that the basic insurance premium may be calculated according to whether the base locations from which the dispatched personnel start to rush are arranged to enable the dispatched personnel to rush to the self-operating vehicles within a predetermined time period. The dispatched personnel may be outsourced to, for example, an external guard business entity. In this case, the basic insurance premium may be calculated according to whether operation (contract) is conducted (made) to enable the dispatched personnel to rush to the self-operating vehicles within a predetermined time period. For example, the basic insurance premium may also be calculated according to the time required for the dispatched personnel to rush to the self-operating vehicles.

For example, the basic insurance premium may be calculated based on training conditions of the operators. Specifically, the basic insurance premium may be calculated according to whether the operators have received a specific training program. Note that in the case where there is a licensing system or a certificate system for the operators, the basic insurance premium may be calculated according to whether the operators have licenses or certificates.

For example, the basic insurance premium may be calculated based on actual working experience of the operators. Examples of the actual working experience include previously experienced time of remote monitoring, the number of times the operators give support by remote control, remotely controlled travel time, remotely controlled travel distance, the number of times or rate that the operators give support by remote control without any accident.

For example, the basic insurance premium may be calculated based on whether an automatic support function of remotely controlling self-operating vehicles 400 via remote management system 200 is provided. Since the operators remotely control the self-operating vehicles while viewing their screen, the range that can be visually checked is more limited than during ordinary control, and this makes remote control difficult. Thus, for example, in the case where remote management system 200 has, as the automatic support function of remote control, a function such as applying automatic brakes when self-operating vehicles that are remotely controlled approach obstacles, safety improves and the basic insurance premium is calculated to be low.

For example, in some cases, operation may be carried out by dividing the operators into those specialized for remote monitoring and those specialized for remote control. In this case, the basic insurance premium may be calculated according to the ratio of the number of operators specialized for remote control to the number of self-operating vehicles 400 remotely monitored. In the case where the aforementioned ratio is high when a request for remote control is received from self-operating vehicle 400, safety improves and the basic insurance premium is calculated to be low because an immediate response to the request is possible.

For example, the basic insurance premium may be calculated based on the function of adding operators who remotely monitor or control self-operating vehicles 400 via remote management system 200 is provided. In the case where the operators are small in number, the presence of the function of adding operators from the outside (e.g., a system in charge of other mobility services) improves safety. Thus, in this case, the basic insurance premium is calculated to be low.

For example, the basic insurance premium may be calculated based on whether the function of enabling the operators to easily recognize occurrences of events when self-operating vehicles 400 are moving is provided. For example, when one operator remotely monitors a plurality of self-operating vehicles 400, the presence of this function reduces the possibility that the operator may overlook occurrences of events, and safety improves. Thus, in this case, the basic insurance premium is calculated to be low. For example, alerts or highlights may be provided to enable the operators to easily recognize occurrences of events when self-operating vehicles 400 are moving

For example, the basic insurance premium may be calculated based on whether the function of improving the safety of other self-operating vehicles 400 when the operators are responding to other requests is provided. For example, in the case where the operator is responding to one request and a different request is received from different self-operating vehicle 400, the absence of this function increases risks because the request received from different self-operating vehicle 400 cannot be responded to immediately. Thus, in this case, the basic insurance premium is calculated to be high. This function may, for example, be a function of enabling other operators to act as substitutes for remotely monitoring other self-operating vehicles 400. Specifically, this function may be a function of, upon receipt of a request, changing an operator who monitors other self-operating vehicles 400 to a different operator. Alternatively, this function may, for example, be a function of controlling other self-operating vehicles 400 not to issue any request when an operator is responding to one request. Specifically, when an operator is responding to one request, other self-operating vehicles 400 may stop or reduce speed, or the travel routes of other self-operating vehicles 400 may be changed to different routes where requests are less likely to occur.

For example, the basic insurance premium may be calculated based on information such as the vehicle type, size, and weight of self-operating vehicle 400. For example, a larger vehicle is more likely to turn over due to the influence of wind and is thus low in safety. Thus, in this case, the basic insurance premium is calculated to be high.

For example, the basic insurance premium may be calculated based on network environments in areas where self-operating vehicle 400 is expected to travel. For example, in the case where there is a delay in communication, remote monitoring and control are affected, and this reduces safety. Thus, in this case, the basic insurance premium is calculated to be high. Information about the network environments may be acquired from, for example, the service business entity or an external business entity for measuring the network environments.

For example, the basic insurance premium may be calculated based on the expected travel speed of self-operating vehicle 400. For example, in the case where the expected travel speed is high, an accident is more likely to occur. Thus, in this case, the basic insurance premium is calculated to be high. Information about the expected travel speed may be acquired from, for example, the service business entity or an external business entity for managing road information.

For example, the basic insurance premium may be calculated based on the weight of freight loaded on self-operating vehicle 400 (or the weight of the vehicle including the freight). For example, in the case where a heavy freight is loaded on a self-operating vehicle, travelling stability decreases and an accident becomes more likely to occur. Thus, in this case, the basic insurance premium is calculated to be high. The weight of the freight loaded on self-operating vehicle 400 may be acquired from, for example, the service business entity.

For example, the basic insurance premium may be calculated based on information that may possibly affect the basic insurance premium out of information about areas where self-operating vehicle 400 is expected to travel. Examples of the information that may possibly affect the basic insurance premium include the number of places with narrow road widths in areas where the self-operating vehicle is expected travel, the lengths of these places, the number of intersections, the number of pedestrian crossings, the number of other mobile units existing around self-operating vehicle 400 per unit time (e.g., a maximum value or an average value), the number of high-risk places in areas where the self-operating vehicle is expected to travel, and the lengths of these places.

For example, in the case where there is a large number of places with narrow road widths, constraints are put on travel (e.g., disapproval of passing other vehicles), and risks increase. Thus, in this case, the basic insurance premium is calculated to be high. The information such as the number of places with narrow road widths in areas where the self-operating vehicle is expected to travel, the lengths of these places, the number of intersections, and the number of pedestrian crossings may be acquired from map information.

For example, in the case where a large number of mobile units exist in areas where the self-operating vehicle is expected to travel, risks become high. Thus, in this case, the basic insurance premium is calculated to be high. Note that if the time zone during which the self-operating vehicle is expected to travel is determined in advance, information about the number of other mobile units existing in this time zone may be acquired. The number of other mobile units existing around self-operating vehicle 400 per unit time may be acquired from cameras or sensors provided at infrastructures such as signals and utility poles, or may be acquired from information about traffic situations acquired by, for example, an external business entity.

For example, the high-risk places in areas where the self-operating vehicle is expected to travel may be places where potential accident events may possibly occur or places where a request for remote control may possibly arise. The number of high-risk places in areas where the self-operating vehicle is expected to travel and the lengths of these places may be acquired by extracting places where potential accident events have occurred or requests for remote control have arisen from information about operation histories of other mobility services and extracting places similar to the aforementioned places from the areas where the self-operating vehicle is expected to travel. Alternatively, the number of high-risk places in the areas where the self-operating vehicle is expected to travel and the lengths of these places may be acquired from simulation results conducted on the current services for which the insurance premium is calculated. As another alternative, the number of high-risk places in the areas where the self-operating vehicle is expected to travel and the lengths of these places may be acquired by experimental travel conducted in the areas where the self-operating vehicle is expected to travel.

### Other Examples of Method of Correcting Basic Insurance Premium

Note that the method of correcting the basic insurance premium (in other words, the method of calculating the dynamic insurance premium) is not limited to the example described above.

For example, the dynamic insurance premium may be calculated based on the travel history of self-operating vehicle 400 during a predetermined time period.

For example, the dynamic insurance premium may be calculated based on the number of times a potential accident event (e.g., possible collisions, urgency stops, or abrupt steering) has occurred during a predetermined time period. For example, if the number of times a potential accident event has occurred during a predetermined time period is zero or small, the basic insurance premium is corrected so as to lower the dynamic insurance premium. For example, if the number of times a potential accident event has occurred during a predetermined time period increases from the number of times during the previous predetermined time period, the basic insurance premium is corrected such that the dynamic insurance premium becomes higher than the basic insurance premium. Note that possible collisions refer to, for example, situations in which the approach distance between self-operating vehicle 400 and a person or an obstacle is less than or equal to a predetermined distance (e.g., 1 m, 0.7 m, 0.5 m, or 0.2 m). Urgency stops refer to, for example, situations in which emergency braking works (e.g., 0.2G, 0.3G, 0.4G, or 0.5G). Abrupt steering refers to, for example, a situation in which the steering angle becomes greater than or equal to a predetermined angle (e.g., 5°/cm, 7°/cm, 10°/cm, or 15°/cm).

For example, the dynamic insurance premium may be calculated based on the number of times the vehicle has passed a location where an accident is likely to occur during a predetermined time period. For example, if the vehicle has passed locations where an accident is likely to occur a large number of times, the basic insurance premium is corrected so as to raise the dynamic insurance premium. Examples of the locations where an accident is likely to occur include locations where an event has occurred in the past, the event including abrupt braking, abrupt steering, issuance of a request for remote control, operator's intervention by remote control, and adverse communication conditions. Note that the locations where an accident is likely to occur may be registered in advance, or if such a location as described above is newly found during the predetermined time period, the newly found location may be added to registration.

For example, the dynamic insurance premium may be calculated based on excess speed relative to an expected travel speed during a predetermined of time (e.g., +0.5 km/h, +1.0 km/h, or +1.5 km/h). For example, if the speed has exceeded the expected travel speed, risks increase and therefore the basic insurance premium is corrected so as to raise the dynamic insurance premium. Note that the dynamic insurance premium may be calculated based on the number of times or the duration of times the speed has exceeded the expected travel speed during the predetermined time period. The expected travel speed may be the speed of self-operating vehicle 400 during autonomous travel, or may be the speed of self-operating vehicle 400 that is remotely controlled.

For example, the dynamic insurance premium may be calculated based on the number of times the self-operating vehicle has departed from an expected travel area during a predetermined time period. Self-operating vehicle 400 travels the expected travel area in advance to check safety, but areas outside the expected travel area have not been checked in advance for the safety. Thus, if the self-operating vehicle has departed from the expected travel area, an accident is more likely to occur. If the self-operating vehicle has departed from the expected travel area a large number of times during the predetermined time period, the basic insurance premium is corrected so as to raise the dynamic insurance premium. Note that the dynamic insurance premium may be calculated based on the duration of time the self-operating vehicle has travelled outside the expected travel area during the predetermined time period or the ratio of a time period during which the self-operating vehicle has travelled outside the expected travel area to the predetermined time period.

For example, the dynamic insurance premium may be calculated based on the number of times a network delay (e.g., Ping 300 ms, 400 ms, or 500 ms) has occurred during a predetermined time period. For example, if there is a long network delay, safe remote monitoring and control become difficult. Thus, in this case, the basic insurance premium is corrected so as to raise the dynamic insurance premium. Note that the dynamic insurance premium may be calculated based on the number of times a cessation of communication has occurred during a predetermined time period. In particular, if any communication anomaly such as a network delay or a cessation of communication has occurred during remote control, an accident becomes more likely to occur. Thus, the dynamic insurance premium may be calculated based on the number of times a communication anomaly has occurred during remote control during the predetermined time period. Alternatively, the dynamic insurance premium may be calculated based on the degree of a network delay.

For example, the dynamic insurance premium may be calculated based on the number of self-operating vehicles 400 operating in a travelling area in which services are provided during a predetermined time period. For example, the larger the number of self-operating vehicles 400 operating in the travelling area, the higher the likelihood of occurrence of an accident. Thus, in this case, the basic insurance premium is corrected so as to raise the dynamic insurance premium. Alternatively, the dynamic insurance premium may be calculated based on the number of other traffic participants such as bicycles and vehicles other than self-operating vehicles 400. The number of other traffic participants may be detected with, for example, image sensors mounted on self-operating vehicles 400, or may be detected using information collected from external equipment (e.g., sensors mounted on infrastructures such as signals or utility poles, or sensors included in other traffic participants).

For example, the dynamic insurance premium may be calculated based on vehicle conditions of self-operating vehicle 400 in motion during a predetermined time period.

For example, the dynamic insurance premium may be calculated based on information about freight loaded on self-operating vehicle 400 that may make the travel of the self-operating vehicle unstable during a predetermined time period. For example, the balance of self-operating vehicle 400 may become unstable depending on the size or weight of the freight. Thus, if the self-operating vehicle loaded with freight having a size or weight that exceeds a predetermined threshold value has travelled with a predetermined ratio or more or a predetermined number of times or more during a predetermined time period, the basic insurance premium is corrected so as to raise the dynamic insurance premium. Note that, since in some cases the size or weight of freight may be determined by the type of the freight, the dynamic insurance premium may be calculated based on the type of the freight loaded during a predetermined time period.

For example, the dynamic insurance premium may be calculated based on the configurations related to the safety of self-operating vehicle 400 during a predetermined time period. For example, although the basic insurance premium is calculated in consideration of the configurations related to the safety of self-operating vehicle 400, these configurations may vary during the predetermined time period. In view of this, it may be determined whether the configurations related to the safety of self-operating vehicle 400 during a predetermined time period are the same as the configurations that have been used to calculate the basic insurance premium, and the dynamic insurance premium may be calculated based on the result of the determination. Note that the dynamic insurance premium may be calculated based on whether the configurations related to the safety of self-operating vehicle 400 operate in an effective way during a predetermined time period.

For example, the dynamic insurance premium may be calculated based on the operational method of remote management system 200 that remotely manages self-operating vehicles 400 during a predetermined time period.

For example, the dynamic insurance premium may be calculated based on the relationship between the number of self-operating vehicles 400 and the number of operators who remotely monitor or control self-operating vehicles 400 via remote management system 200 during a predetermined time period. Specifically, the dynamic insurance premium may be calculated based on the number of self-operating vehicles 400 monitored by one operator during a predetermined time period. For example, as the number of self-operating vehicles 400 monitored by one operator increases, less attention is paid to each one self-operating vehicle 400 and safety decreases. Thus, in this case, the basic insurance premium is corrected so as to raise the dynamic insurance premium. Note that the number of self-operating vehicles 400 monitored by one operator during the predetermined time period may vary over time. Thus, the dynamic insurance premium may be calculated based on an average number of self-operating vehicles 400 monitored by one operator during the predetermined time period. Alternatively, the dynamic insurance premium may be calculated based on the number of times the number of self-operating vehicles 400 monitored by one operator has exceeded a predetermined number during a predetermined time period. As another alternative, the dynamic insurance premium may be calculated based on the ratio of a time period during which the number of self-operating vehicles 400 monitored by one other has exceeded a predetermined number during a predetermined time period.

For example, the dynamic insurance premium may be calculated based on the number of times a request for remote control is issued from self-operating vehicle 400 during a predetermined time period. For example, it is conceivable that, when self-operating vehicle 400 has detected the occurrence of an event, autonomous travel of self-operation vehicle 400 may become difficult, and an operator may be requested to take some measures. In this case, self-operating vehicle 400 stops urgently, so that an accident becomes more likely to occur. Thus, for example, if the number of times a request for remote control is issued is greater than a predetermined number of times, the basic insurance premium may be corrected so as to raise the dynamic insurance premium. Note that, depending on the event, quick support by an operator may become necessary (e.g., an emergency stop due to a breakdown), or such quick support may be unnecessary (e.g., in the case of an event in which the self-operating vehicle returns to a carport). That is, depending on the type of the event that has occurred, the possibility of occurrence of an accident may become high, or may not become so high. In view of this, the aforementioned predetermined number of times may vary depending on the type of the event.

For example, the dynamic insurance premium may be calculated based on the response time taken for an operator to start to respond to a request for remote control received from self-operating vehicle 400 during a predetermined time period. Specifically, the dynamic insurance premium may be calculated based on the number of times the operator could not immediately respond to the request during the predetermined time period (in other words, the number of times a predetermined amount of time is taken to respond to the request). If the number of times the response time takes a predetermined amount of time or more is large, the number of times self-operating vehicle 400 waits in a potentially hazardous condition for a long time increases, and accordingly an accident becomes more likely to occur. Thus, in this case, the basic insurance premium is corrected so as to raise the dynamic insurance premium. Note that, since the response time is also regarded as a standby time for self-operating vehicle 400, the dynamic insurance premium may be calculated based on the standby time for self-operating vehicle 400 during a predetermined time period. Alternatively, the dynamic insurance premium may be calculated based on the length of the response time taken for an operator to start to respond to a request for remote control received from self-operating vehicle 400 during a predetermined time period. For example, the basic insurance premium may be corrected such that, even if the response time exceeds a predetermined amount of time, the dynamic insurance premium for the case of a shorter response time before the start of the response becomes lower than the dynamic insurance premium for the case of a longer response time before the start of the response.

For example, the dynamic insurance premium may be calculated based on the number of times an operator has not immediately responded to a request for remote control received from self-operating vehicle 400 during a predetermined time period. The situation that the operator could not immediately respond to the request can be detected in cases such as where the response time becomes longer than a predetermined amount of time or where the number of self-operating vehicles 400 that have issued a request exceeds the number of operators.

For example, the dynamic insurance premium may be calculated based on the number of times dispatched personnel who rush to self-operating vehicles 400 upon occurrence of an event when self-operating vehicles 400 are moving has been sent to self-operating vehicle 400 during a predetermined time period. The dispatched personnel are sent to the self-operating vehicle when even an operator is unable to respond to a request. Thus, the number of times the dispatched personnel are sent to self-operating vehicle 400 can also be said as the number of times a request cannot be responded to by remote control. For example, in the case where the dispatched personnel are sent to self-operating vehicle 400, self-operating vehicle 400 is stopped for a long term, and accordingly an accident becomes more likely to occur. Thus, in this case, the basic insurance premium is corrected so as to raise the dynamic insurance premium.

For example, the dynamic insurance premium may be calculated based on a recovery time taken for self-operating vehicle 400 to return to autonomous travel since issuance of a request for remote control from self-operating vehicle 400 during a predetermined time period. As factors that lengthen the recovery time, the following cases are conceivable: a case where an operator is unable to immediately respond to a request due to a quick response is impossible due to reasons such as the operator is responding to a different request; a case where it takes time to respond to the request itself; and a case including both of the above-described cases. If the operator is unable to immediately respond to the request, self-operating vehicle 400 is stopped for a long term, and accordingly an accident becomes more likely to occur. If it takes time to respond to the request itself, the operator may have a lower degree of concentration due to long-time remote control, and accordingly an accident becomes more likely to occur. Thus, for example, if the recovery time is long, the basic insurance premium is corrected so as to raise the dynamic insurance premium.

For example, the dynamic insurance premium may be calculated based on the experience of an operator during a predetermined time period. It is conceivable that the operator's skill improves with increasing experience, and for example, the time required for remote control may be shortened by the skill improvement. Thus, as the experience of the operator increases, it is possible to shorten the time required to stop self-operating vehicles that are not responding to the request even if multiple requests are issued at the same time, and accordingly an accident is less likely to occur. Thus, in this case, the basic insurance premium is corrected so as to lower the dynamic insurance premium. Note that the experience of the operator may be experience for each task (e.g., experience for each of remote control and remote monitoring). The experience of remote control may refer to, for example, the number of times or the amount of time the operator could respond to the request by remote control without any accident.

For example, the dynamic insurance premium may be calculated based on the time required for the dispatched personnel to rush to the self-operating vehicle during a predetermined time period. For example, in the case where the dispatched personnel is sent to self-operating vehicle 400, as the time required to send the dispatched personnel increases, self-operating vehicle 400 is stopped for a longer time with increasing amount of time required for the dispatched personnel to rush to the self-operating vehicle, and accordingly an accident becomes more likely to occur. Thus, in this case, the basic insurance premium is corrected so as to raise the dynamic insurance premium. For example, the rushing time may be calculated from the amount of time required from when a request has been issued from self-operating vehicle 400 to when the dispatched personnel have arrived at self-operating vehicle 400. Note that the dynamic insurance premium may be calculated based on the amount of time required from when the dispatched personnel have rushed to self-operating vehicle 400 until the dispatched personnel have completed the response to the request during a predetermined time period.

For example, the dynamic insurance premium may be calculated based on the distance that the self-operating vehicle has travelled safely during a predetermined time period. If the safe travel time is long, the basic insurance premium is corrected so as to lower the dynamic insurance premium.

For example, the dynamic insurance premium may be calculated based on a time zone of travel during a predetermined time period. For example, if the amount of time during which the self-operating vehicle has travelled in a time zone in which an accident is highly likely to occur is high in ratio to the predetermined time period, the basic insurance premium is corrected so as to raise the dynamic insurance premium.

For example, the dynamic insurance premium may be calculated based on the circumstances surrounding self-operating vehicle 400 in motion during a predetermined time period.

For example, the dynamic insurance premium may be calculated based on traffic environments in which self-operating vehicle 400 travels during a predetermined time period. For example, if the number of times or the amount of time the self-operating vehicle travels in traffic environments in which there is a high incidence of accidents during a predetermined time period, the basic insurance premium is corrected so as to raise the dynamic insurance premium. Examples of the traffic environments in which there is a high incidence of accidents include roads where a pedestrian road and a vehicle road are not segregated, and roads where no zones 30 zones (30-km/h areas) are set and the speed limit is relatively high. Examples of the traffic environments in which there is a high incidence of accidents also include roads with no guardrails nor roadside barrier pipes, roads with no attention-attracting road signs, and out-of-sight roads with obstacles such as roadside trees.

For example, the dynamic insurance premium may be calculated based on the traffic volume in the area where self-operating vehicle 400 travels during a predetermined time period. For example, if the number of times or the amount of time the self-operating vehicle travels in high traffic volume time periods where there is a high incidence of accidents during a predetermined time period is large, the basic insurance premium is corrected so as to raise the dynamic insurance premium. Note that the high traffic volume where there is a high incidence of accidents may have a threshold value that is set for the number of times of travel or the amount of travel time for each classification such as pedestrians (adjusts), pedestrians (children), bicycles, motorbikes, automobiles, and trucks.

### Other Embodiments

Although the insurance-premium calculation method and vehicle insurance system 100 (insurance-premium calculation system) according to one or a plurality of aspects of the present disclosure have been described based on some embodiments, the present disclosure is not intended to be limited to these embodiments. Those skilled in the art will readily appreciate that various modifications may be made to each exemplary embodiment, and other embodiments may be made by arbitrarily combining some constituent elements described in different exemplary embodiments without departing from the principles and spirit of the inventive concept of the present disclosure.

For example, although the case where self-operating vehicles 400 are used as autonomous mobile units is taken as an example in the description of the above embodiments, the autonomous mobile units are not limited to self-operating vehicles 400. For example, the autonomous mobile units may be mobile units that autonomously move such as robots or drones, and the present disclosure is also applicable to such autonomous mobile units.

For example, the present disclosure may be realized as a program for causing a processor to execute the steps included in the insurance-premium calculation method. Moreover, the present disclosure may be realized as a non-transitory computer-readable recording medium such as a CD-ROM that records the program described above.

For example, in the case where the present disclosure is realized as a program (software), each step is executed by executing the program, using hardware resources of a computer such as a CPU, memories, and input and output circuits. That is, each step is executed by the CPU acquiring data from, for example, the memories or the input and output circuits and performing computations or outputting the results of computations to, for example, the memories or the input and output circuits.

Note that, in the above-described embodiments, each constituent element included in vehicle insurance system 100 may be configured by dedicated hardware, or may be realized by executing a software program suitable for the constituent element. Each constituent element may also be realized by a program executor such as a CPU or a processor reading and executing a software program recorded on a recording medium such as a hard disk or a semiconductor memory.

Some or all of the functions of vehicle insurance system 100 according to the above-described embodiments are typically realized as an LSI serving as an integrated circuit. These functions may be individually mounted on a signal chip, or some or all of the functions may be mounted on a single chip. The method of circuit integration is not limited to the one using an LSI, and may be realized by using a dedicated circuit or a general-purpose processor. Circuit integration may also use a field programmable gate array (FPGA) that enables programming after manufacture of an LSI, or a reconfigurable processor capable of reconfiguring connections and settings of circuit cells inside an LSI.

The present disclosure also includes various modifications achieved by any combination of constituent elements and functions conceivable by those skilled in the art, without departing from the scope of the present disclosure.

### [Industrial Applicability]

The present disclosure is applicable to, for example, systems for providing services using autonomous mobile units such as self-operating vehicles.

### [Reference Signs List]

100 vehicle insurance system
110, 240, 330, 450 processing unit
111 basic-insurance-premium determiner
112 insurance-premium corrector
120, 250, 340, 460 storage
121 basic-insurance-premium table
122 dynamic-insurance-premium table
130, 260, 350, 470 communicator
200 remote management system
210, 310 input device
220, 320 output device
230 timing device
241 vehicle-safety-configuration information generator
242 predetermined-time-period vehicle-condition information generator
251, 341 vehicle information
252 travel history
253 event history
300 service business system
331 delivery vehicle determiner
332 delivery route determiner
333 vehicle allocation indicator
342 task information
343 user information
400 self-operating vehicle
401 hacking security
402 remote monitor
403, 464 autonomous software
404 safety board
405 sensor/hardware configuration
410 image capturer
420 sensor
430 driver
440 locator
451 travel controller
452 event detector
453 remote control requester
454 driving-mode switcher
461 own vehicle information
462 route information
463 event information

## Claims

1. An insurance-premium calculation method that is executed by a computer, the insurance-premium calculation method comprising:
acquiring first information about a configuration included in an autonomous mobile unit;
calculating, in accordance with the first information, a first insurance premium on a loss that is possibly be incurred when the autonomous mobile unit is moving;
acquiring second information about a condition of the autonomous mobile unit in motion during a first period;
calculating a second insurance premium by correcting the first insurance premium in accordance with the second information; and
outputting the second insurance premium as an insurance premium for a second period later than the first period.

2. The insurance-premium calculation method according to claim 1,
wherein the first information includes information about a combination of the configuration, redundancy of the configuration, an anti-hacking measure taken for the configuration, performance of the configuration, certification for safety of the configuration, or a modification to the configuration.

3. The insurance-premium calculation method according to claim 1 or 2,
wherein the second information includes information about a vehicle condition of the autonomous mobile unit in motion, a circumstance surrounding the autonomous mobile unit in motion, a travel history of the autonomous mobile unit, an occurrence of an event when the autonomous mobile unit is moving, or a request for remote control received from the autonomous mobile unit, the information being acquired during the first period.

4. The insurance-premium calculation method according to any one of claims 1 to 3,
wherein, in the calculating of the first insurance premium, the first insurance premium is calculated further in accordance with a function of a remote management system or an operational method of the remote management system, the remote management system remotely managing the autonomous mobile unit.

5. The insurance-premium calculation method according to claim 4,
wherein, in the calculating of the first insurance premium, the first insurance premium is calculated in accordance with a relationship between a total number of autonomous mobile units, each of which is the autonomous mobile unit, and a total number of operators who remotely monitor or control the autonomous mobile units via the remote management system, a training condition of the operators, or actual working experience of the operators.

6. The insurance-premium calculation method according to claim 4 or 5,
wherein, in the calculating of the first insurance premium, the first insurance premium is calculated in accordance with:
whether a function of taking over remote monitoring via the remote management system when a request for remote control is received from the autonomous mobile unit is provided;
whether an automatic support function of remotely controlling the autonomous mobile unit via the remote management system is provided;
whether a function of adding an operator who remotely monitors or controls the autonomous mobile unit via the remote management system is provided;
whether a function of enabling the operator to easily recognize occurrence of an event when the autonomous mobile unit is moving is provided; or
whether a function of improving safety of a different autonomous mobile unit that is the autonomous mobile unit when the operator is responding to the request is provided.

7. The insurance-premium calculation method according to any one of claims 4 to 6,
wherein, in the calculating of the first insurance premium, the first insurance premium is calculated in accordance with a total number of base locations for the autonomous mobile unit, the base locations being supported by the remote management system.

8. The insurance-premium calculation method according to any one of claims 4 to 7,
wherein, in the calculating of the first insurance premium, the first insurance premium is calculated in accordance with a total number of dispatched personnel who rush to the autonomous mobile unit upon occurrence of an event when the autonomous mobile unit is moving, a total number of base locations from which the dispatched personnel start to rush, or a time required for the dispatched personnel to rush to the autonomous mobile unit.

9. The insurance-premium calculation method according to any one of claims 1 to 8,
wherein, in the calculating of the second insurance premium, the second insurance premium is calculated further in accordance with an operational method of a remote management system that remotely manages the autonomous mobile unit during the first period.

10. The insurance-premium calculation method according to claim 9,
wherein, in the calculating of the second insurance premium, the second insurance premium is calculated in accordance with information about a relationship between a total number of autonomous mobile units, each of which is the autonomous mobile unit, and a total number of operators who remotely monitor or control the autonomous mobile units via the remote management system, or actual working experience of the operators, the information being acquired during the first period.

11. The insurance-premium calculation method according to claim 9 or 10,
wherein, in the calculating of the second insurance premium, the second insurance premium is calculated in accordance with information about a total number of times a request for remote control is received from the autonomous mobile unit, a response time required to start to respond to the request, or a recovery time required for the autonomous mobile unit to return to autonomous travel after the request, the information being acquired during the first period.

12. The insurance-premium calculation method according to any one of claims 9 to 11,
wherein, in the calculating of the second insurance premium, the second insurance premium is calculated in accordance with information about a total number of times dispatched personnel who rush to the autonomous mobile unit are sent to the autonomous mobile unit upon occurrence of a request when the autonomous mobile unit is moving, or a time required for the dispatched personnel to rush to the autonomous mobile unit, the information being acquired during the first period.

13. A program for causing a computer to execute the insurance-premium calculation method according to any one of claims 1 to 12.

14. An insurance-premium calculation system comprising:
a first acquirer that acquires first information about a configuration included in an autonomous mobile unit;
a calculator that calculates, in accordance with the first information, a first insurance premium on a loss that is possibly incurred when the autonomous mobile unit is moving;
a second acquirer that acquires second information about a condition of the autonomous mobile unit in motion during a first period;
a calculator that calculates a second insurance premium by correcting the first insurance premium in accordance with the second information; and
an output device that outputs the second insurance premium as an insurance premium for a second period later than the first period.
